# FASCICULE DE BREVET EUROPEEN

(11) **EP 3 762 219 B1**
(45) Date de publication et mention de la délivrance du brevet: **16.08.2023**
(21) Numéro de dépôt: 19709044.2
(22) Date de dépôt: 06.03.2019
(51) Int. Cl.: B29C 65/02, B29L 31/00, F17C 1/16, B29C 69/00, B29C 65/10, B29C 63/08, B29C 53/56, B29C 65/06

(54) **RÉSERVOIR COMPOSITE ET SON PROCÉDÉ DE FABRICATION**
VERBUNDTANK UND VERFAHREN ZUR HERSTELLUNG DAVON
COMPOSITE TANK AND METHOD FOR MANUFACTURING SAME

(30) Priorité: 06.03.2018 FR 1851936; 06.03.2018 FR 1851937; 06.03.2018 FR 1851938
(43) Date de publication de la demande: 13.01.2021
(73) Titulaire: PLASTIC OMNIUM NEW ENERGIES FRANCE, 69007 Lyon (FR)
(72) Inventeur: CRIEL, Bjorn, 1750 Sint-Martens-Lennik (BE); DUHEM, Nicolas, 1120 Bruxelles (BE); PERROT, Alice, 1070 Anderlecht (BE)
(74) Mandataire: LLR
(86) Numéro de dépôt international: PCT/EP2019/055617
(87) Numéro de publication internationale: WO 2019/170777

(56) Documents cités:
- JP-A- 2010 111 036
- JP-A- 2012 002 342
- US-A1- 2008 187 697

## Description

La présente invention concerne, de façon générale, le domaine technique des réservoirs de stockage de gaz à haute pression, en particulier de gaz utilisé comme combustible, par exemple de l'hydrogène, dans un véhicule automobile. Plus particulièrement, l'invention se rapporte à un réservoir composite de stockage de gaz comprimé à haute pression comprenant un liner en matière plastique et une enveloppe de renforcement en matériau composite. Le liner en plastique comporte au moins une ouverture latérale à une première de ses extrémités, une paroi intérieure et une paroi extérieure.

Ce document divulgue également un procédé de fabrication d'un réservoir composite de stockage de gaz à haute pression du type comprenant un liner en plastique.

La réglementation concernant les réservoirs de stockage de gaz à haute pression à bord de véhicules automobiles, comme par exemple de l'hydrogène gazeux comprimé à 700 bar ou du gaz naturel comprimé à 350 bar (appelé CNG), reconnaît quatre types de réservoirs :
I. les réservoirs entièrement métalliques (1 kg/litre),
II. les réservoirs frettés dont la chemise intérieure ou « liner » (partie conçue pour garantir l'étanchéité au gaz) assure à lui seul la résistance mécanique, l'enroulement filamentaire autour du liner n'assurant qu'un complément de sécurité par rapport à la rupture (0,8 kg/litre),
III. les réservoirs entièrement renforcés, constitués d'un liner métallique assurant l'étanchéité et d'un renfort bobiné sur les parties cylindriques ainsi que sur les extrémités (0,4 kg/litre),
IV. les réservoirs composites constitués d'un liner en matière plastique sur lequel un enroulement filamentaire (bobinage composite) est réalisé sur les parties cylindriques ainsi que sur les extrémités (0,35 kg/litre). Un tel réservoir est décrit par exemple dans le document de brevet EP0333013A1 ou US 2008/0187697 A1.

Ces quatre types de réservoirs répondent aux spécifications données par la réglementation et font l'objet de contrôles rigoureux pendant leur durée de vie. Soumis à des essais particulièrement sévères (statique, fatigue, impact de projectiles basse et haute énergie, feu), ils présentent le même niveau de sécurité.

Ainsi, la substitution d'un réservoir en acier de type I par un réservoir composite de type IV permet d'alléger le réservoir de stockage de gaz embarqué à bord d'un véhicule sans dégrader les caractéristiques mécaniques (iso-niveau de sécurité).

Il est connu de fabriquer un liner en matière plastique d'un réservoir composite en assemblant à étanchéité plusieurs pièces en plastique, par exemple, une calotte sphérique assemblée à chaque extrémité d'un cylindre. Dans ce cas, la tenue mécanique du liner et son étanchéité dépendent de la qualité de l'assemblage des pièces constitutives du liner.

Pour l'assemblage à étanchéité, il est connu de souder les pièces en plastique par infrarouge, par laser, par soufflage d'air chaud ou d'azote pour ce qui est des techniques de chauffage sans contact ou, alternativement, par friction, par lame chauffante ou miroir chauffant pour ce qui des techniques de chauffage avec contact. Pour assurer une bonne soudure, les pièces en plastique sont chauffées localement, c'est-à-dire qu'elles sont chauffées dans la zone de contact des pièces et pressées l'une contre l'autre pour assurer la liaison mécanique et l'étanchéité des pièces entre elles. Dans la zone de contact, les pièces en plastique présentent des surfaces de contact complémentaires, c'est-à-dire que la surface d'une pièce en plastique en contact avec la surface d'une autre pièce en plastique est identique. Afin de pouvoir assurer leur assemblage ultérieur, il faut donc respecter des contraintes géométriques lors de la fabrication des pièces en plastiques, ce qui n'est pas satisfaisant en termes de coût de fabrication et de procédé d'assemblage des pièces en plastiques.

Un but de la présente invention est de s'affranchir des contraintes géométriques lors de la fabrication des pièces en plastique. A cette fin, l'invention a pour objet un réservoir composite de stockage de gaz à haute pression comprenant un liner et au moins une enveloppe de renforcement du liner en matériau composite, le liner ayant une forme allongée le long d'un axe longitudinal et comprenant au moins une zone de liaison dans laquelle un premier élément en un premier polymère thermoplastique est assemblé à étanchéité avec un deuxième élément en un deuxième polymère thermoplastique pour former un volume intérieur de stockage de gaz, le premier élément ayant dans la zone de liaison avec le deuxième élément une forme circulaire ou elliptique délimitant le volume intérieur de stockage de gaz, la forme circulaire ou elliptique du premier élément étant définie par un premier grand axe intérieur et un premier grand axe extérieur ainsi que par un premier petit axe intérieur et un premier petit axe extérieur, le deuxième élément ayant dans la zone de liaison avec le premier élément une forme circulaire ou elliptique délimitant le volume intérieur de stockage de gaz, la forme circulaire ou elliptique du deuxième élément étant définie par un deuxième grand axe intérieur et un deuxième grand axe extérieur ainsi que par un deuxième petit axe intérieur et un deuxième petit axe extérieur. Selon l'invention, le premier grand axe extérieur est égal au deuxième grand axe extérieur et le premier petit axe extérieur est égal au deuxième petit axe extérieur et le premier grand axe intérieur est différent du deuxième grand axe intérieur et le premier petit axe intérieur est différent du deuxième petit axe intérieur.

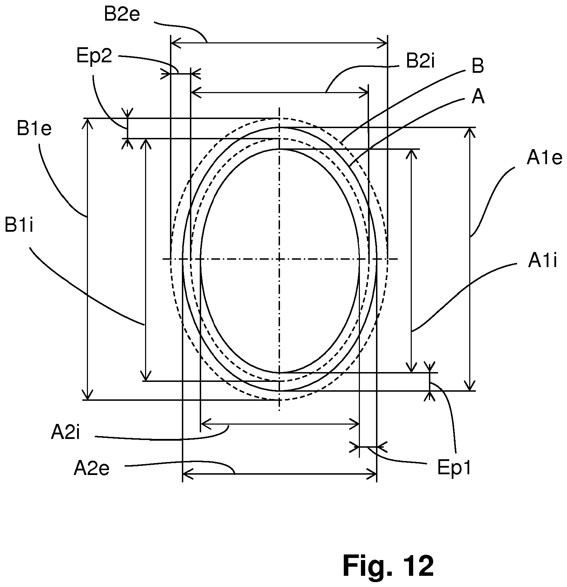

Par « intérieur », on entend désigner tout ce qui est situé en dedans du liner pris dans son ensemble, avant ou après l'assemblage de ses pièces constitutives. Par « extérieur », on entend désigner tout ce qui est situé au dehors du liner, avant ou après l'assemblage de ses pièces constitutives. La forme circulaire ou elliptique mentionnée précédemment est visible dans un plan de coupe transversale traversant la zone de liaison (cf. figure 12). Un plan de coupe transversale est un plan perpendiculaire à l'axe longitudinal du liner. L'axe longitudinal du liner est l'axe le long duquel le liner s'étend en longueur.

Dans le cas d'une forme elliptique, on désigne par « grand axe » la longueur du segment qui passe par les deux foyers de l'ellipse et la rejoint en ses deux points les plus opposés et, on désigne par « petit axe » la longueur du segment porté par la droite passant par le centre de l'ellipse et perpendiculaire au grand axe de celle-ci. Dans le cas d'une forme circulaire, le grand axe et le petit axe sont égaux, ils correspondent au diamètre du cercle.

Grâce à l'invention, il n'est plus nécessaire de fabriquer les pièces constitutives d'un liner avec des surfaces de contact complémentaires, c'est-à-dire des surfaces identiques à l'interface de contact, au contraire, les surfaces de contact peuvent être différentes, ceci permet de réduire le coût de leur fabrication. En effet, en offrant une plus grande liberté géométrique des surfaces de contact des pièces en plastique, l'invention permet de s'affranchir de contraintes géométriques de fabrication tout en assurant une bonne liaison des pièces entre elles.

Selon des caractéristiques additionnelles de l'invention :
- le premier élément comprend un tube et le deuxième élément comprend une calotte appelée « dôme ». Cette configuration permet de réaliser un liner par l'assemblage à étanchéité d'une calotte sur un tube ouvert d'un côté et fermé de l'autre par un fond bombé.
- le premier élément comprend en outre une calotte appelée « dôme ». Cette configuration permet de réaliser un liner par l'assemblage à étanchéité de deux calottes sur une virole.
- le deuxième élément comprend en outre un tube. Cette configuration permet de réaliser un liner par l'assemblage à étanchéité de deux tubes ouverts d'un côté et fermé de l'autre par un fond bombé.
- l'assemblage à étanchéité du premier élément avec le deuxième élément dans la zone de liaison est un assemblage « bout à bout ». Cette configuration permet d'éviter de rajouter des surépaisseurs de matière dans la zone de liaison des premier et deuxième éléments.
- le deuxième élément comprend un sommet à une première extrémité et une base à une deuxième extrémité et le deuxième élément est prolongé à sa deuxième extrémité par une interface tubulaire de section circulaire ou elliptique. Grâce à cette caractéristique, l'assemblage à étanchéité du premier élément avec le deuxième élément est facilité. En effet, il n'est pas aisé de saisir le deuxième élément par son sommet, au contraire d'une prolongation de sa base qui offre une zone de préhension plus facile pour un opérateur ou un outil.
- la longueur de l'interface tubulaire est supérieure ou égale à 10 mm. Grâce à cette caractéristique, on s'assure que la zone de préhension du deuxième élément est suffisante pour un opérateur ou un outil.
- le premier grand axe intérieur et/ou le premier petit axe intérieur est inférieur de 0,1 mm à 1,5 mm au deuxième grand axe intérieur et/ou au deuxième petit axe intérieur, respectivement. De cette façon, on est sûr que toute la surface de contact de la forme circulaire ou elliptique du deuxième élément est en contact avec au moins une partie de la surface de contact opposée de la forme circulaire ou elliptique du premier élément, dans la zone de liaison des premier et deuxième éléments. Par cette disposition, le premier élément a une épaisseur de matière plus importante que le deuxième élément dans la zone de liaison, ce qui est particulièrement utile si lorsque le premier élément est un tube extrudé.
- le deuxième grand axe intérieur et/ou le deuxième petit axe intérieur est inférieur de 0,1 mm à 1,5 mm au premier grand axe intérieur et/ou au premier petit axe intérieur, respectivement. De cette façon, on est sûr que toute la surface de contact de la forme circulaire ou elliptique du premier élément est en contact avec au moins une partie de la surface de contact opposée de la forme circulaire ou elliptique du deuxième élément, dans la zone de liaison des premier et deuxième éléments.
- l'assemblage à étanchéité du premier élément avec le deuxième élément dans la zone de liaison est un assemblage par enchevêtrement moléculaire de chaînes polymériques du premier polymère thermoplastique et de chaînes polymériques du deuxième polymère thermoplastique. Ceci est particulièrement avantageux car il permet de rendre l'assemblage résistant à la traction.

Par l'expression « un assemblage par enchevêtrement moléculaire de chaînes polymériques » d'un premier polymère thermoplastique et d'un second polymère thermoplastique, on comprend deux matériaux polymères pressés ensemble de telle manière qu'un phénomène d'autohésion se produit. Une telle autohésion est le phénomène décrivant la diffusion intermoléculaire et l'enchevêtrement de chaînes moléculaires à travers une interface polymère formant une liaison forte. A la différence de l'adhésion, laquelle concerne l'énergie de surface (ou des liaisons chimiques secondaires entre deux matériaux soit similaires soit non similaires), l'autohésion concerne l'enchevêtrement de chaînes moléculaires et les liaisons secondaires pour des chaînes polymères de matériaux compatibles chimiquement. Dans des conditions idéales, la diffusion est complète lorsque l'interface entre les deux matériaux polymères n'est plus discernable de la masse de chacun des deux matériaux polymères. Par exemple, concernant deux matériaux polymères thermoplastiques, une fois que le contact polymère thermoplastique - polymère thermoplastique est obtenu à l'interface, la diffusion intermoléculaire et l'enchevêtrement est nécessaire pour terminer le processus et former une bonne soudure. Un tel phénomène d'autohésion est par exemple décrit dans la publication « Plastics and Composites Welding Handbook », ISBN 1-56990-313-1, page 23.

On comprend donc que le premier polymère thermoplastique et le deuxième polymère thermoplastique sont compatibles chimiquement. Par « compatible chimiquement », on entend designer le fait que les premier et deuxième matériaux polymères comprennent chacun des espèces chimiques pouvant être soudées ensemble, sans nécessiter d'ajout de matière supplémentaire. En d'autres termes, des matériaux polymères compatibles chimiquement sont aptes à se lier intimement entre eux par fusion, et à réaliser en particulier un enchevêtrement moléculaire de chaînes polymériques entre eux. Le soudage des deux matériaux polymères est compris comme la mise en contact des deux matériaux polymères de telle manière que le phénomène d'autohésion se produit à l'endroit du contact. Le phénomène d'autohésion se produit par l'apport de chaleur à l'endroit du contact.
- les premier et deuxième polymères thermoplastiques sont des polyamides (PA), des polyphthalamides (PPA) ou un mélange de PA et de PPA. Grâce à cette caractéristique, on obtient des éléments en plastique ayant une perméabilité au gaz respectant le règlement n° 134 de l'ONU concernant l'adoption de prescriptions uniformes relatives à l'homologation des véhicules automobiles et de leurs composants en ce qui concerne les prescriptions de sécurité des véhicules fonctionnant à l'hydrogène.
- le réservoir comprend en outre, dans la zone de liaison, un anneau formé au moins en partie dans une première épaisseur du premier élément et/ou dans une deuxième épaisseur du deuxième élément du liner. Grâce à cette caractéristique, les bourrelets qui se forment dans le volume intérieur du liner ne débordent plus ou quasiment plus dans le volume intérieur mais sont confinés dans des espaces prévus à cet effet, espaces formés au moins en partie dans la première et/ou dans la deuxième épaisseur du liner. En effet, lors de l'assemblage à chaud, lorsque les pièces en plastique sont pressées les unes contre les autres, il se forme des bourrelets à la périphérie de la zone de liaison. Ces bourrelets, aussi appelés cordons de soudure, sont de la matière plastique issue des pièces en plastique, expulsée hors de la zone de liaison lors du pressage à chaud des pièces en plastique. Les bourrelets ne sont pas souhaités parce qu'ils ne remplissent aucune fonction, ni mécanique, ni autre. Les bourrelets sont encore moins souhaités dans un réservoir composite de stockage de gaz à haute pression, par exemple de l'hydrogène gazeux comprimé à 700 bar. En effet, la présence de tels bourrelets dans le volume intérieur d'un liner créée des concentrations de contraintes mécaniques dans la zone de liaison ainsi que des cloques d'hydrogène dans cette même zone, à cause du phénomène appelée phénomène d'hydrogène « blistering ».
- l'anneau présente, dans un plan de coupe longitudinale passant par l'axe longitudinal, une section soit en forme de U, de triangle, d'ellipse ou de rectangle. De telles formes permettent de limiter le débordement du bourrelet dans le volume intérieur du liner.

Dans un mode particulier de l'invention, l'enveloppe de renforcement en matériau composite est un bobinage filamentaire imprégné d'une résine. Ainsi, on obtient un réservoir composite de stockage de gaz à haute pression qui résiste mieux à la pression interne.

Un autre objet décrit est un procédé de fabrication d'un réservoir composite comprenant les étapes suivantes :
- obtenir un liner fabriqué selon les étapes suivantes :
   - obtenir un premier élément en un premier polymère thermoplastique ayant, à une première extrémité, une forme circulaire ou elliptique définie par un premier grand axe intérieur et un premier grand axe extérieur ainsi que par un premier petit axe intérieur et un premier petit axe extérieur,
   - obtenir un deuxième élément en un deuxième polymère thermoplastique ayant, à une deuxième extrémité, une forme circulaire ou elliptique définie par un deuxième grand axe intérieur et un deuxième grand axe extérieur ainsi que par un deuxième petit axe intérieur et un deuxième petit axe extérieur,
   - assembler à étanchéité le premier élément sur le deuxième élément dans une zone de liaison par enchevêtrement moléculaire de chaînes polymériques du premier polymère thermoplastique et de chaînes polymériques du deuxième polymère thermoplastique, pour former un volume intérieur de stockage de gaz,
   - égaliser le premier grand axe extérieur du premier élément et le deuxième grand axe extérieur du deuxième élément si le premier grand axe extérieur n'est pas égal au deuxième grand axe extérieur,
   - égaliser le premier petit axe extérieur du premier élément et le deuxième petit axe extérieur du deuxième élément si le premier petit axe extérieur n'est pas égal au deuxième petit axe extérieur,
- envelopper le liner d'un matériau composite par enroulement filamentaire de fibres de carbone et/ou de verre et/ou d'aramide, imprégnées d'une résine.

Selon des caractéristiques additionnelles du procédé de fabrication d'un réservoir :
- une étape d'élargissement de la section de la première extrémité du premier élément et/ou un élargissement de la section de la deuxième extrémité du deuxième élément est prévue avant l'étape d'assemblage. En effet, si la première extrémité du premier élément a une section trop réduite par rapport à la deuxième extrémité du deuxième élément, avant assemblage par enchevêtrement moléculaire, on peut envisager d'élargir la section de la première extrémité du premier élément en chauffant assez cette extrémité pour la ramollir et l'élargir avec un outil adapté, comme par exemple un élargisseur de tuyau. Dans le cas où c'est la deuxième extrémité du deuxième élément qui a une section trop réduite par rapport à la première extrémité du premier élément, avant assemblage par enchevêtrement moléculaire, on peut pareillement envisager d'élargir la section de la deuxième extrémité du deuxième élément selon la même technique décrite précédemment. Grâce à cette caractéristique, on relâche aussi les contraintes mécaniques résiduelles dans le polymère thermoplastique des premier et deuxième éléments.
- l'égalisation consiste en un enlèvement de matière, par exemple par rectification, du premier élément et/ou du deuxième élément.
- le premier élément est un tube obtenu par extrusion et le deuxième élément est une calotte obtenue par moulage par injection et l'assemblage à étanchéité est un assemblage de la première extrémité du tube à la deuxième extrémité du dôme. En effet, une pièce fabriquée par extrusion est moins chère à fabriquer qu'une pièce fabriquée par injection. De plus, en réalisant le premier élément par extrusion, il est possible de fabriquer un liner très allongé le long de son axe longitudinal grâce au fait qu'un tube obtenu par extrusion n'est pas limité dans sa longueur par le procédé d'extrusion. Ainsi, un liner dont le premier élément est obtenu par extrusion peut facilement mesurer deux mètres de long et servir à fabriquer un réservoir composite embarqué dans un véhicule long comme, par exemple, un bus.
- l'enlèvement de matière est réalisé sur la deuxième extrémité du dôme.
- le premier élément a une première viscosité à l'état fondu et le deuxième élément a une deuxième viscosité à l'état fondu et la première viscosité est supérieure à la deuxième viscosité, par exemple, au moins 10 % supérieure. La viscosité précitée et dans la suite est la viscosité dynamique. Grâce à cette caractéristique, le premier élément est plus facile à mettre en oeuvre par extrusion et le deuxième élément est plus facile à mettre en oeuvre par moulage par injection.

Par « à l'état fondu », on entend désigner ici une température correspondant à 20°C au-dessus de la température de transition vitreuse pour un polymère amorphe ou 20°C au-dessus de la température de fusion pour un polymère semi-cristallin. Cela signifie que le polymère se trouve dans un état dans lequel il est capable de s'écouler.

Pour déterminer la température de transition vitreuse ou de fusion d'un polymère, on utilise une des méthodes spécifiées par la norme ISO 11357-1 de l'année 2016, basée sur la calorimétrie différentielle à balayage. Par exemple dans le cas d'un PA6, on effectue un chauffage à une vitesse de 10°C/min entre 23°C et 280°C, puis un refroidissement à une vitesse de 10°C/min de 280°C à 23°C suivi d'un deuxième chauffage de 23°C à 280°C à une vitesse de 10°C/min, sous atmosphère d'azote avec un débit d'azote de 50 ml par minute. La quantité de polymère utilisée pour cette mesure est par exemple 10mg. Le premier chauffage permet d'effacer l'histoire thermique du polymère tandis que le deuxième chauffage est utilisé afin de déterminer les valeurs de température de transition vitreuse et de fusion.

Pour un matériau hygroscopique tel que le PA6, PA66 et PPA, l'échantillon est d'abord séché avant la mesure de la température de transition vitreuse ou de fusion. En effet, la température de transition vitreuse ou de fusion d'un matériau polymère dépend de son taux d'humidité. Le séchage de l'échantillon est réalisé dans un four à air sec avec un point de rosée de -40°C. Pour un PA6 par exemple, le séchage dure 6 heures à 80°C. Après séchage, le taux maximum d'humidité dans la matière ne doit pas dépasser 0,06% pour un PA6 et 0,045% pour un PPA. Le taux d'humidité est mesuré par titration selon la méthode Karl Fischer reprise dans la norme ISO 760 de l'année 1978.

La viscosité d'un matériau polymère est mesurée en chauffant un échantillon de ce matériau à 20°C au-dessus de sa température de transition vitreuse ou de fusion. Pour un PA6 par exemple, la température de fusion étant de 220°C, la viscosité est mesurée à 240°C.

La norme ISO 6721-10 de l'année 2015 définit la méthode utilisée pour déterminer la viscosité en cisaillement d'un polymère à l'état fondu à l'aide d'un rhéomètre plan-plan, par exemple, un rhéomètre de type « ARES » de la marque TA Instruments. La viscosité est mesurée avec un taux de cisaillement de 100 s⁻¹ et s'exprime en Pa.s. La température est maintenue constante pendant la mesure.
- l'enchevêtrement moléculaire est obtenu par chauffage de la première extrémité du premier élément et chauffage de la deuxième extrémité du deuxième élément puis par pressage de la première extrémité du premier élément contre la deuxième extrémité du deuxième élément.
- le chauffage est un chauffage sans contact.
- le chauffage sans contact est un chauffage au gaz, par exemple, à l'azote. Ceci permet d'éviter l'oxydation des surfaces de contact de la forme circulaire ou elliptique du premier et du deuxième élément lors de leur assemblage mutuel à étanchéité dans la zone de liaison. Cette caractéristique permet aussi d'obtenir un assemblage à étanchéité du premier élément sur le deuxième élément ayant une résistance à la traction mécanique au moins égal à 90 % de la résistance à la traction mécanique du premier élément pris tout seul, selon la norme ISO 527 à 23°C et 50 % d'humidité relative,
- l'enchevêtrement moléculaire est obtenu par friction de la première extrémité du premier élément avec la deuxième extrémité du deuxième élément. Grâce à cette caractéristique, on n'a plus besoin de chauffer d'abord la première extrémité du premier élément et la deuxième extrémité du deuxième élément, puis de presser la première extrémité du premier élément contre la deuxième extrémité du deuxième élément. En effet, la friction du premier élément avec le deuxième élément va permettre de chauffer et de presser les premier et deuxième éléments en même temps, c'est-à-dire en une seule étape.
- le premier élément a une première épaisseur à la première extrémité et comprend un creux annulaire dans la première épaisseur, le deuxième élément a une deuxième épaisseur à la deuxième extrémité et comprend un creux annulaire dans la deuxième épaisseur, le procédé comprend une étape intermédiaire, entre l'étape d'obtention d'un deuxième élément et l'étape d'assemblage à étanchéité, de mise en contact de la première extrémité du premier élément avec la deuxième extrémité du deuxième élément dans une zone de liaison afin de faire coopérer le creux annulaire de la première épaisseur avec le creux annulaire de la deuxième épaisseur. Grâce à cette caractéristique, les bourrelets qui se forment dans le volume intérieur du liner ne débordent plus ou quasiment plus dans le volume intérieur mais sont confinés dans des espaces créés à cet effet.
- le creux annulaire dans la première épaisseur et/ou la deuxième épaisseur du premier élément et/ou du deuxième élément est soit un épaulement intérieur situé à l'intérieur du premier élément et/ou du deuxième élément, soit une rainure à arête vive, soit une gorge. Grâce à cette caractéristique, le débordement du bourrelet dans le volume intérieur du liner est limité.
- le creux annulaire dans la première épaisseur du premier élément est un épaulement intérieur situé à l'intérieur du premier élément, le creux annulaire dans la deuxième épaisseur du deuxième élément est une rainure annulaire, une portion tubulaire prolonge l'extrémité du deuxième élément pour pouvoir emboîter le deuxième élément à l'intérieur du premier élément lors de l'assemblage par enchevêtrement moléculaire. Grâce à cette caractéristique, le débordement du bourrelet dans le volume intérieur du liner est limité.

On va maintenant décrire, à titre d'exemples non limitatifs, différents modes de réalisation de l'invention à l'aide des figures suivantes :
- la figure 1 est une vue schématique d'un liner selon l'invention,
- la figure 2 est une vue schématique des éléments constitutifs d'un liner selon un premier mode de réalisation de l'invention,
- la figure 3 est une vue schématique des éléments constitutifs d'un liner selon un deuxième mode de réalisation de l'invention,
- la figure 4 est une vue schématique des éléments constitutifs d'un liner selon un troisième mode de réalisation de l'invention,
- la figure 5A est une coupe schématique partielle d'un premier mode d'assemblage à étanchéité des éléments constitutifs d'un liner, avant assemblage par enchevêtrement moléculaire,
- la figure 5B est une vue qui correspond à la vue de la figure 5A, après assemblage par enchevêtrement moléculaire,
- la figure 5C est une vue qui correspond à la vue de la figure 5B, après égalisation,
- la figure 6A est une coupe schématique partielle d'un deuxième mode d'assemblage à étanchéité des éléments constitutifs d'un liner, avant assemblage par enchevêtrement moléculaire,
- la figure 6B est une vue qui correspond à la vue de la figure 6A, après assemblage par enchevêtrement moléculaire,
- la figure 6C est une vue qui correspond à la vue de la figure 6B, après égalisation,
- la figure 7A est une coupe schématique partielle d'un troisième mode d'assemblage à étanchéité des éléments constitutifs d'un liner, avant assemblage par enchevêtrement moléculaire,
- la figure 7B est une vue qui correspond à la vue de la figure 7A, après assemblage par enchevêtrement moléculaire,
- la figure 8A est une coupe schématique partielle d'un quatrième mode d'assemblage à étanchéité des éléments constitutifs d'un liner, avant assemblage par enchevêtrement moléculaire,
- la figure 8B est une vue qui correspond à la vue de la figure 8A, après assemblage par enchevêtrement moléculaire,
- la figure 9A est une coupe schématique partielle d'un cinquième mode d'assemblage à étanchéité des éléments constitutifs d'un liner, avant assemblage par enchevêtrement moléculaire,
- la figure 9B est une vue qui correspond à la vue de la figure 9A, après assemblage par enchevêtrement moléculaire,
- la figure 10A est une coupe schématique partielle d'un sixième mode d'assemblage à étanchéité des éléments constitutifs d'un liner, avant assemblage par enchevêtrement moléculaire,
- la figure 10B est une vue qui correspond à la vue de la figure 10A, après assemblage par enchevêtrement moléculaire,
- la figure 11A est une coupe schématique partielle d'un septième mode d'assemblage à étanchéité des éléments constitutifs d'un liner, avant assemblage par enchevêtrement moléculaire,
- la figure 11B est une vue qui correspond à la vue de la figure 11A, après assemblage par enchevêtrement moléculaire,
- la figure 12 est une vue en coupe transversale d'un liner selon l'invention.

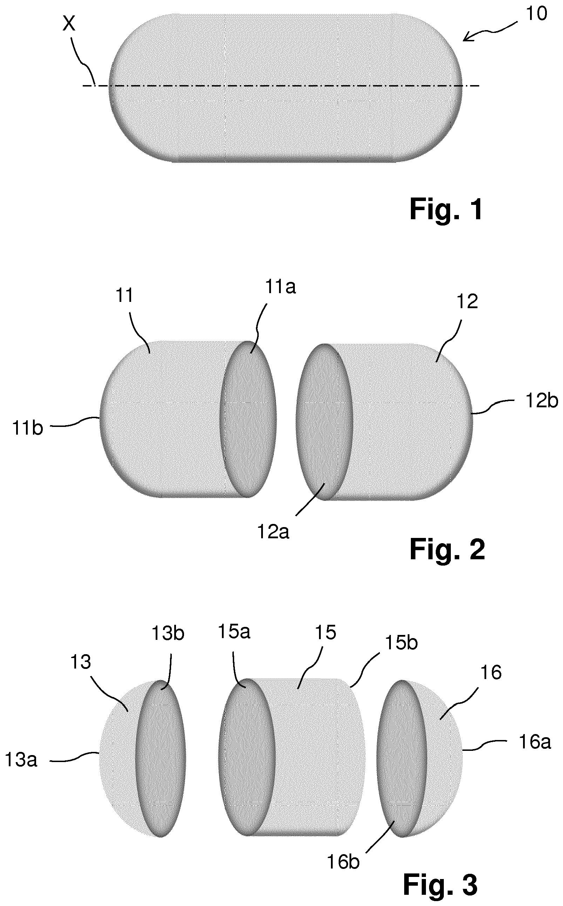

La figure 1 est une représentation schématique d'un liner 10 ayant un axe longitudinal X et une section circulaire ou elliptique dans un plan de coupe transversale. Un réservoir de section elliptique présente l'avantage d'être plus compact qu'un réservoir de section circulaire (réservoir cylindrique). Une ellipse étant définie géométriquement par un grand axe et par un petit axe, on notera qu'un liner est cylindrique dès lors que son grand axe est égal à son petit axe.

La figure 2 illustre schématiquement les éléments constitutifs d'un liner en plastique selon un premier mode de réalisation de l'invention. Dans ce mode particulier de réalisation, le liner est fabriqué par l'assemblage à étanchéité de deux tubes en plastique 11, 12, chaque tube présentant une ouverture 11a, 12a d'un côté et une fermeture 11b, 12b de l'autre, comme une éprouvette. La fermeture 11b, 12b est constituée par un fond bombé du tube 11, 12. Les tubes 11, 12 sont fabriqués par moulage par injection ou par injection-soufflage.

La figure 3 illustre schématiquement les éléments constitutifs d'un liner en plastique selon un deuxième mode de réalisation de l'invention. Dans ce mode particulier de réalisation, le liner est fabriqué par l'assemblage à étanchéité de deux calottes sphériques en plastique 13, 16 sur une virole en plastique 15. Chaque calotte 13, 16 présente un sommet à une première extrémité 13a, 16a et une base à une deuxième extrémité 13b, 16b. Afin de réussir l'assemblage à étanchéité, la deuxième extrémité de chaque calotte 13, 16 est mise en contact avec une extrémité de la virole 15. Les calottes sphériques 13, 16 sont fabriquées par moulage par injection tandis que la virole 15 est fabriquée par extrusion. En effet, une pièce fabriquée par extrusion est moins chère à fabriquer qu'une pièce fabriquée par injection. De plus, en réalisant le premier élément par extrusion, il est possible de fabriquer un liner très allongée le long de l'axe longitudinal X grâce au fait qu'un tube obtenu par extrusion n'est pas limité dans sa longueur par le procédé d'extrusion.

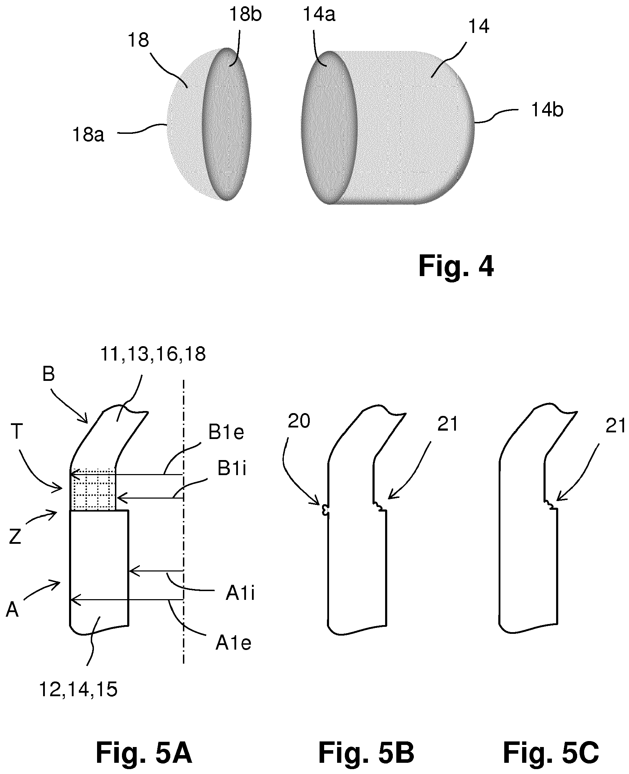

La figure 4 illustre schématiquement les éléments constitutifs d'un liner en plastique selon un troisième mode de réalisation de l'invention. Dans ce mode particulier de réalisation, le liner est fabriqué par l'assemblage à étanchéité d'une calotte sphérique en plastique 18 sur un tube en plastique 14. Le tube 14 est ouvert d'un côté 14a et fermé de l'autre côté 14b par un fond bombé, comme une éprouvette. La calotte 18 présente un sommet à une première extrémité 18a et une base à une deuxième extrémité 18b. Afin de réussir l'assemblage à étanchéité, la deuxième extrémité 18b de la calotte est mise en contact avec le côté ouvert 14a du tube 14. La calotte sphérique 18 est fabriquée par moulage par injection tandis que le tube 14 est fabriqué par moulage par injection ou par injection-soufflage.

La figure 5A montre en coupe schématique partielle un premier mode d'assemblage à étanchéité des éléments constitutifs d'un liner, avant assemblage par enchevêtrement moléculaire. Dans ce mode particulier d'assemblage, un élément A est assemblé à étanchéité avec un élément B dans une zone de liaison Z pour former un volume intérieur de stockage de gaz (non représenté). Dans la zone de liaison Z, l'élément A a, en coupe transversale, une forme circulaire ou elliptique délimitant le volume intérieur de stockage de gaz et définie par un grand axe intérieur A1i, un grand axe extérieur A1e (la moitié des axes A1i, A1e est représentée), un petit axe intérieur A2i et un petit axe extérieur A2e (les axes A2i, A2e ne sont pas représentés). De même, dans la zone de liaison Z, l'élément B a, en coupe transversale, une forme circulaire ou elliptique elliptique délimitant le volume intérieur de stockage de gaz et définie par un grand axe intérieur B1i, un grand axe extérieur B1e (la moitié des axes B1i, B1e est représentée), un petit axe intérieur B2i et un petit axe extérieur B2e (les axes B2i, B2e ne sont pas représentés).

Le grand axe extérieur A1e est égal au grand axe extérieur B1e. De même, le petit axe extérieur A2e est égal au petit axe extérieur B2e (non représentés). Le grand axe intérieur A1i est inférieur au grand axe intérieur B1i. Le petit axe intérieur A2i est inférieur au petit axe intérieur B2i (non représentés). De préférence, le grand axe intérieur A1i et le petit axe intérieur A2i sont inférieurs de 0,1 mm à 1,5 mm au grand axe intérieur B1i et au petit axe intérieur B2i, respectivement. De cette façon, dans la zone de liaison Z des éléments A et B, toute la surface de contact de la forme circulaire ou elliptique de l'élément B est en contact avec au moins une partie de la surface de contact opposée de la forme circulaire ou elliptique de l'élément A.

L'élément A est par exemple le tube 12 de la figure 2, la virole 15 de la figure 3 ou le tube 14 de la figure 4. L'élément B est par exemple le tube 11 de la figure 2, la calotte 13,16 de la figure 3 ou la calotte 18 de la figure 4. Avantageusement, l'assemblage des éléments A et B se fait bout à bout, ceci permet d'éviter de rajouter des surépaisseurs de matière dans la zone de liaison des éléments A et B. De préférence, l'assemblage bout à bout des éléments A et B se fait sur des surfaces planes.

De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA), des polyphthalamides (PPA) ou un mélange de PA et de PPA. Dans une variante de réalisation, les polymères thermoplastiques M1 et M2 ont le même grade, c'est-à-dire la même composition chimique.

Dans ce mode de réalisation de l'invention, l'élément B est prolongé à sa deuxième extrémité par une interface tubulaire T de section circulaire ou elliptique (voir la partie quadrillée). De préférence, l'interface tubulaire T est un tube de section circulaire ou elliptique ayant une longueur supérieure ou égale à 10 mm.

La figure 5B est une vue correspondant à la vue de la figure 5A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme des bourrelets 20, 21 à la périphérie intérieure et extérieure de la zone de liaison Z. Ces bourrelets 20, 21, aussi appelés cordons de soudure, sont de la matière plastique issue des éléments A et B, expulsée hors de la zone de liaison Z lors du pressage à chaud de l'élément A contre l'élément B. Quand l'assemblage par enchevêtrement moléculaire s'est bien passé, on observe que toute la surface de contact de l'élément B en contact avec la surface de contact opposée de l'élément A, dans la zone de liaison Z, disparaît.

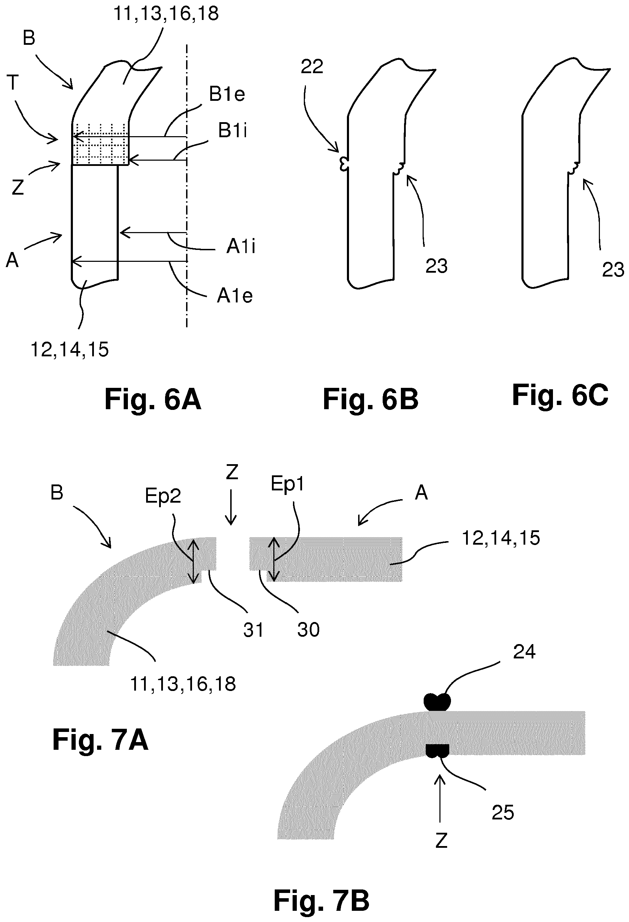

La figure 5C est une vue qui correspond à la vue de la figure 5B, après égalisation. Par « égalisation », on entend désigner une étape de conformation de l'élément A et/ou de l'élément B afin de rendre la surface extérieure de l'élément A coaxiale à la surface extérieure de l'élément B, dans la zone de liaison Z. En effet, les bourrelets 20, 21 ne sont pas souhaités parce qu'ils ne remplissent aucune fonction, ni mécanique, ni autre. Le bourrelet interne 21 qui se forme dans le volume intérieur du liner n'étant pas facilement accessible quand le liner est constitué n'est pas supprimé. Toutefois, même si le bourrelet interne 21 n'est pas supprimé, il peut être confiné (voir figures 7B, 8B, 9B, 10B et 11B). C'est différent pour le bourrelet externe 20 qui se forme à l'extérieur du liner, ce dernier peut être supprimé et doit l'être pour ne pas gêner l'enroulement filamentaire du liner. En effet, après que le liner ait été constitué, il est enveloppé d'un matériau composite par enroulement filamentaire de fibres de carbone et/ou de verre et/ou d'aramide, imprégnées d'une résine, pour constituer un réservoir composite.

Le bourrelet externe 20 est supprimé par usinage, par exemple par rectification de l'élément A et/ou l'élément B selon que le bourrelet externe 20 déborde de l'élément A et/ou de l'élément B. Il peut aussi arriver que la surface extérieure de l'élément A ne soit pas parfaitement alignée avec la surface extérieure de l'élément B, dans la zone de liaison Z, autrement dit que le grand axe extérieur A1e de l'élément A soit différent du grand axe extérieur B1e de l'élément B et/ou que le petit axe extérieur A2e de l'élément A soit différent du petit axe extérieur B2e de l'élément B, dans ce cas, une rectification de l'élément A et/ou B est nécessaire. Les opérations d'usinage décrites précédemment sont un exemple d'égalisation.

La figure 6A montre en coupe schématique partielle un deuxième mode d'assemblage à étanchéité des éléments constitutifs d'un liner, avant assemblage par enchevêtrement moléculaire. Dans ce mode particulier d'assemblage, un élément A est assemblé à étanchéité avec un élément B dans une zone de liaison Z pour former un volume intérieur de stockage de gaz (non représenté). Dans la zone de liaison Z, l'élément A a, en coupe transversale, une forme circulaire ou elliptique définie par un grand axe intérieur A1i, un grand axe extérieur A1e (la moitié des axes A1i, A1e est représentée), un petit axe intérieur A2i et un petit axe extérieur A2e (les axes A2i, A2e ne sont pas représentés). De même, dans la zone de liaison Z, l'élément B a, en coupe transversale, une forme circulaire ou elliptique définie par un grand axe intérieur B1i, un grand axe extérieur B1e (la moitié des axes B1i, B1e est représentée), un petit axe intérieur B2i et un petit axe extérieur B2e (les axes B2i, B2e ne sont pas représentés).

Le grand axe extérieur A1e est égal au grand axe extérieur B1e. De même, le petit axe extérieur A2e est égal au petit axe extérieur B2e (non représentés). Le grand axe intérieur A1i est supérieur au grand axe intérieur B1i. Le petit axe intérieur A2i est supérieur au petit axe intérieur B2i (non représentés). De préférence, le grand axe intérieur A1i et le petit axe intérieur A2i sont supérieurs de 0,1 mm à 1,5 mm au grand axe intérieur B1i et au petit axe intérieur B2i, respectivement. De cette façon, dans la zone de liaison Z des éléments A et B, toute la surface de contact de la forme circulaire ou elliptique de l'élément A est en contact avec au moins une partie de la surface de contact opposée de la forme circulaire ou elliptique de l'élément B.

L'élément A est par exemple le tube 12 de la figure 2, la virole 15 de la figure 3 ou le tube 14 de la figure 4. L'élément B est par exemple le tube 11 de la figure 2, la calotte 13, 16 de la figure 3 ou la calotte 18 de la figure 4. Avantageusement, l'assemblage des éléments A et B se fait bout à bout, ceci permet d'éviter de rajouter des surépaisseurs de matière dans la zone de liaison des éléments A et B. De préférence, l'assemblage bout à bout des éléments A et B se fait sur des surfaces planes.

De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA), des polyphthalamides (PPA) ou un mélange de PA et de PPA.

Dans ce mode de réalisation de l'invention, l'élément B est prolongé à sa deuxième extrémité par une interface tubulaire T de section circulaire ou elliptique (voir la partie quadrillée). De préférence, l'interface tubulaire T est un tube de section circulaire ou elliptique ayant une longueur supérieure ou égale à 10 mm.

La figure 6B est une vue correspondant à la vue de la figure 6A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme des bourrelets 22, 23 à la périphérie intérieure et extérieure de la zone de liaison Z. Ces bourrelets 22, 23, aussi appelés cordons de soudure, sont de la matière plastique issue des éléments A et B, expulsée hors de la zone de liaison Z lors du pressage à chaud de l'élément A contre l'élément B. Quand l'assemblage par enchevêtrement moléculaire s'est bien passé, on observe que toute la surface de contact de l'élément A en contact avec la surface de contact opposée de l'élément B, dans la zone de liaison Z, disparaît.

La figure 6C est une vue qui correspond à la vue de la figure 6B, après égalisation. Par « égalisation », on entend désigner une étape de conformation de l'élément A et/ou de l'élément B afin de rendre la surface extérieure de l'élément A coaxiale à la surface extérieure de l'élément B, dans la zone de liaison Z. En effet, les bourrelets 22, 23 ne sont pas souhaités parce qu'ils ne remplissent aucune fonction, ni mécanique, ni autre. Le bourrelet interne 23 qui se forme dans le volume intérieur du liner n'étant plus accessible quand le liner est constitué n'est pas supprimé. Toutefois, même si le bourrelet interne 23 n'est pas supprimé, il peut être confiné (voir figures 7B, 8B, 9B, 10B et 11B). C'est différent pour le bourrelet externe 22 qui se forme à l'extérieur du liner, ce dernier peut être supprimé et doit l'être pour ne pas gêner l'enroulement filamentaire du liner. En effet, après que le liner ait été constitué, il est enveloppé d'un matériau composite par enroulement filamentaire de fibres de carbone et/ou de verre et/ou d'aramide, imprégnées d'une résine, pour constituer un réservoir composite.

Le bourrelet externe 22 est supprimé par usinage, par exemple par rectification de l'élément A et/ou l'élément B selon que le bourrelet externe 22 déborde de l'élément A et/ou de l'élément B. Il peut aussi arriver que la surface extérieure de l'élément A ne soit pas parfaitement alignée avec la surface extérieure de l'élément B, dans la zone de liaison Z, autrement dit que le grand axe extérieur A1e de l'élément A soit différent du grand axe extérieur B1e de l'élément B et/ou que le petit axe extérieur A2e de l'élément A soit différent du petit axe extérieur B2e de l'élément B, dans ce cas, une rectification de l'élément A et/ou B est nécessaire. Les opérations d'usinage décrites précédemment sont un exemple d'égalisation.

La figure 7A montre en coupe schématique partielle un troisième mode d'assemblage à étanchéité des éléments constitutifs d'un liner, avant assemblage par enchevêtrement moléculaire. Dans ce mode particulier d'assemblage, l'élément A présente une épaisseur Ep1 et un épaulement intérieur 30 à l'extrémité de l'élément A qui vient en contact avec l'élément B, dans la zone de liaison Z. L'épaulement intérieur 30 est situé à l'intérieur de l'élément A. De même, l'élément B présente une épaisseur Ep2 et un épaulement intérieur 31 à l'extrémité de l'élément B qui vient en contact avec l'élément A, dans la zone de liaison Z. L'épaulement intérieur 31 est situé à l'intérieur de l'élément B.

L'élément A est par exemple le tube 12 de la figure 2, la virole 15 de la figure 3 ou le tube 14 de la figure 4. L'élément B est par exemple le tube 11 de la figure 2, la calotte 13, 16 de la figure 3 ou la calotte 18 de la figure 4. De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA), des polyphthalamides (PPA) ou un mélange de PA et de PPA.

La figure 7B est une vue correspondant à la vue de la figure 7A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme des bourrelets 24, 25 à la périphérie intérieure et extérieure de la zone de liaison Z. Ces bourrelets 24, 25, aussi appelés cordons de soudure, sont de la matière plastique issue des éléments A et B, expulsée hors de la zone de liaison Z lors du pressage à chaud de l'élément A contre l'élément B. Dans ce mode préféré d'assemblage par enchevêtrement moléculaire, le bourrelet interne 25 formé dans le volume intérieur du liner se trouve confiné dans l'espace délimité par les épaulements intérieurs 30, 31. En effet, l'espace délimité par les épaulements intérieurs 30, 31 forme une gorge intérieure à l'intérieur du liner, sur la paroi intérieure dudit liner, gorge dans laquelle le bourrelet interne 25 vient se loger. Grâce à cette caractéristique, le bourrelet interne 25 ne déborde plus ou quasiment plus des éléments A et/ou B, ce qui permet d'éviter certains problèmes rencontrés lors de l'utilisation de réservoirs composites de stockage de gaz, par exemple de l'hydrogène, à haute pression. On peut citer deux exemples de problème, la concentration de contraintes dans la zone de liaison Z et la formation de cloques d'hydrogène dans cette même zone, aussi appelée phénomène d'hydrogène « blistering ».

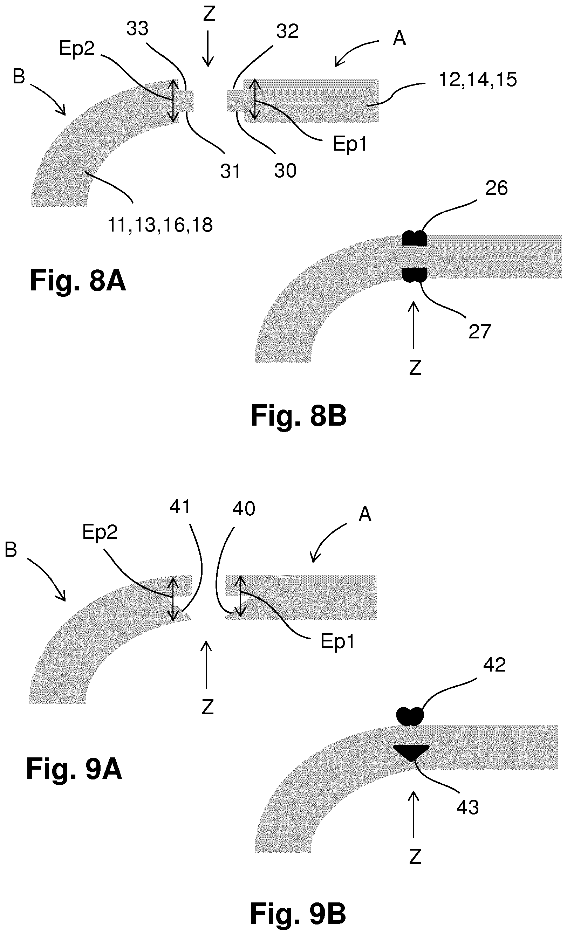

La figure 8A montre en coupe schématique partielle un quatrième mode d'assemblage à étanchéité des éléments constitutifs d'un liner, avant assemblage par enchevêtrement moléculaire. Dans ce mode particulier d'assemblage, l'élément A présente une épaisseur Ep1 et deux épaulements 30, 32 à l'extrémité de l'élément A qui vient en contact avec l'élément B, dans la zone de liaison Z. L'épaulement 30 est un épaulement intérieur situé à l'intérieur de l'élément A tandis que l'épaulement 32 est un épaulement extérieur situé à l'extérieur de l'élément A. De même, l'élément B présente une épaisseur Ep2 et deux épaulements 31, 33 à l'extrémité de l'élément B qui vient en contact avec l'élément A, dans la zone de liaison Z. L'épaulement 31 est un épaulement intérieur situé à l'intérieur de l'élément B tandis que l'épaulement 33 est un épaulement extérieur situé à l'extérieur de l'élément B.

L'élément A est par exemple le tube 12 de la figure 2, la virole 15 de la figure 3 ou le tube 14 de la figure 4. L'élément B est par exemple le tube 11 de la figure 2, la calotte 13, 16 de la figure 3 ou la calotte 18 de la figure 4. De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA).

La figure 8B est une vue correspondant à la vue de la figure 8A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme des bourrelets 26, 27 à la périphérie intérieure et extérieure de la zone de liaison Z. Ces bourrelets 26, 27, aussi appelés cordons de soudure, sont de la matière plastique issue des éléments A et B, expulsée hors de la zone de liaison Z lors du pressage à chaud de l'élément A contre l'élément B. Dans ce mode préféré d'assemblage par enchevêtrement moléculaire, le bourrelet interne 27 formé dans le volume intérieur du liner se trouve confiné dans l'espace délimité par les épaulements intérieurs 30, 31. En effet, l'espace délimité par les épaulements intérieurs 30, 31 forme une gorge intérieure à l'intérieur du liner, sur la paroi intérieure dudit liner, gorge dans laquelle le bourrelet interne 27 vient se loger. Grâce à cette caractéristique, le bourrelet interne 27 ne déborde plus ou quasiment plus des éléments A et/ou B, ce qui permet d'éviter certains problèmes rencontrés lors de l'utilisation de réservoirs composites de stockage de gaz, par exemple de l'hydrogène, à haute pression. On peut citer deux exemples de problème, la concentration de contraintes dans la zone de liaison Z et la formation de cloques d'hydrogène dans cette même zone, aussi appelée phénomène d'hydrogène « blistering ». Toujours dans ce mode préféré d'assemblage par enchevêtrement moléculaire, le bourrelet externe 26 qui se forme à l'extérieur du liner se trouve confiné dans l'espace délimité par les épaulements extérieurs 32, 33. En effet, l'espace délimité par les épaulements extérieurs 32, 33 forme une gorge extérieure à l'extérieur du liner dans laquelle le bourrelet externe 26 vient se loger. Grâce à cette caractéristique, le bourrelet externe 26 ne déborde plus ou quasiment plus des éléments A et/ou B, ce qui veut dire qu'il ne gêne pas l'enroulement filamentaire du liner.

La figure 9A montre en coupe schématique partielle un cinquième mode d'assemblage à étanchéité des éléments constitutifs d'un liner, avant assemblage par enchevêtrement moléculaire. Dans ce mode particulier d'assemblage, l'élément A présente une épaisseur Ep1 et une rainure à arête vive 40 à l'extrémité de l'élément A qui vient en contact avec l'élément B, dans la zone de liaison Z. La rainure 40 est située entre l'intérieur et l'extérieur de l'élément A, c'est-à-dire dans l'épaisseur de l'élément A. De même, l'élément B présente une épaisseur Ep2 et une rainure à arête vive 41 à l'extrémité de l'élément B qui vient en contact avec l'élément A, dans la zone de liaison Z. La rainure 41 est située entre l'intérieur et l'extérieur de l'élément B, c'est-à-dire dans l'épaisseur de l'élément B.

L'élément A est par exemple le tube 12 de la figure 2, la virole 15 de la figure 3 ou le tube 14 de la figure 4. L'élément B est par exemple le tube 11 de la figure 2, la calotte 13, 16 de la figure 3 ou la calotte 18 de la figure 4. De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA), des polyphthalamides (PPA) ou un mélange de PA et de PPA.

La figure 9B est une vue correspondant à la vue de la figure 9A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme un bourrelet externe 42 à la périphérie extérieure de la zone de liaison Z ainsi qu'un bourrelet interne 43 à l'intérieur de l'espace délimité par les rainures 40, 41. Ces bourrelets 42, 43, aussi appelés cordons de soudure, sont de la matière plastique issue des éléments A et B, expulsée hors de la zone de liaison Z lors du pressage à chaud de l'élément A contre l'élément B. Dans ce mode préféré d'assemblage par enchevêtrement moléculaire, le bourrelet interne 43 se trouve confiné dans l'espace délimité par les rainures 40, 41. En effet, l'espace délimité par les rainures 40, 41 forme un anneau de section triangulaire dans l'épaisseur du liner, espace dans lequel le bourrelet interne 43 vient se loger. Grâce à cette caractéristique, le bourrelet interne 43 ne déborde plus ou quasiment plus des éléments A et/ou B, ce qui permet d'éviter certains problèmes rencontrés lors de l'utilisation de réservoirs composites de stockage de gaz, par exemple de l'hydrogène, à haute pression. On peut citer deux exemples de problème, la concentration de contraintes dans la zone de liaison Z et la formation de cloques d'hydrogène dans cette même zone, aussi appelée phénomène d'hydrogène « blistering ».

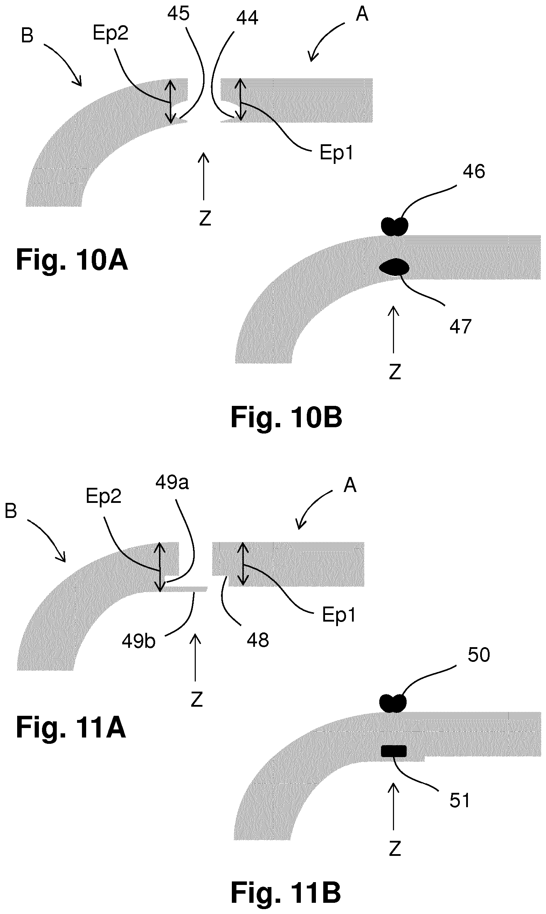

La figure 10A montre en coupe schématique partielle un sixième mode d'assemblage à étanchéité des éléments constitutifs d'un liner, avant assemblage par enchevêtrement moléculaire. Dans ce mode particulier d'assemblage, l'élément A présente une épaisseur Ep1 et une gorge annulaire 44 à l'extrémité de l'élément A qui vient en contact avec l'élément B, dans la zone de liaison Z. La gorge annulaire 44 est située entre l'intérieur et l'extérieur de l'élément A, c'est-à-dire dans l'épaisseur de l'élément A. De même, l'élément B présente une épaisseur Ep2 et une gorge annulaire 45 à l'extrémité de l'élément B qui vient en contact avec l'élément A, dans la zone de liaison Z. La gorge annulaire 45 est située entre l'intérieur et l'extérieur de l'élément B, c'est-à-dire dans l'épaisseur de l'élément B.

L'élément A est par exemple le tube 12 de la figure 2, la virole 15 de la figure 3 ou le tube 14 de la figure 4. L'élément B est par exemple le tube 11 de la figure 2, la calotte 13, 16 de la figure 3 ou la calotte 18 de la figure 4. De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA), des polyphthalamides (PPA) ou un mélange de PA et de PPA.

La figure 10B est une vue correspondant à la vue de la figure 10A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme un bourrelet externe 46 à la périphérie extérieure de la zone de liaison Z ainsi qu'un bourrelet interne 47 à l'intérieur de l'espace délimité par les gorges annulaires 44, 45. Ces bourrelets 46, 47, aussi appelés cordons de soudure, sont de la matière plastique issue des éléments A et B, expulsée hors de la zone de liaison Z lors du pressage à chaud de l'élément A contre l'élément B. Dans ce mode préféré d'assemblage par enchevêtrement moléculaire, le bourrelet interne 47 se trouve confiné dans l'espace délimité par les gorges annulaires 44, 45. En effet, l'espace délimité par les gorges annulaires 44, 45 forme un anneau de section elliptique dans l'épaisseur du liner, espace dans lequel le bourrelet interne 47 vient se loger. Grâce à cette caractéristique, le bourrelet interne 47 ne déborde plus ou quasiment plus des éléments A et/ou B, ce qui permet d'éviter certains problèmes rencontrés lors de l'utilisation de réservoirs composites de stockage de gaz, par exemple de l'hydrogène, à haute pression. On peut citer deux exemples de problème, la concentration de contraintes dans la zone de liaison Z et la formation de cloques d'hydrogène dans cette même zone, aussi appelée phénomène d'hydrogène « blistering ».

La figure 11A montre en coupe schématique partielle un septième mode d'assemblage à étanchéité des éléments constitutifs d'un liner, avant assemblage par enchevêtrement moléculaire. Dans ce mode particulier d'assemblage, l'élément A présente une épaisseur Ep1 et un épaulement intérieur 48 à l'extrémité de l'élément A qui vient en contact avec l'élément B, dans la zone de liaison Z. L'épaulement intérieur 48 est situé à l'intérieur de l'élément A. De même, l'élément B présente une épaisseur Ep2 et une rainure annulaire 49a à l'extrémité de l'élément B qui vient en contact avec l'élément A, dans la zone de liaison Z. La rainure annulaire 49a est située entre l'intérieur et l'extérieur de l'élément B, c'est-à-dire dans l'épaisseur de l'élément B. L'extrémité de l'élément B qui vient en contact avec l'élément A, dans la zone de liaison Z, est prolongée par une portion tubulaire 49b prévu pour s'emboîter à l'intérieur de l'élément A lors de l'assemblage par enchevêtrement moléculaire.

L'élément A est par exemple le tube 12 de la figure 2, la virole 15 de la figure 3 ou le tube 14 de la figure 4. L'élément B est par exemple le tube 11 de la figure 2, la calotte 13, 16 de la figure 3 ou la calotte 18 de la figure 4. De préférence, l'élément A est fabriqué en un polymère thermoplastique M1 et l'élément B est fabriqué en un polymère thermoplastique M2. Avantageusement, les polymères thermoplastiques M1 et M2 sont des polyamides (PA), des polyphthalamides (PPA) ou un mélange de PA et de PPA.

La figure 11B est une vue correspondant à la vue de la figure 11A, après assemblage par enchevêtrement moléculaire. Dans un mode préféré d'assemblage par enchevêtrement moléculaire, on chauffe l'extrémité de l'élément A qui vient en contact avec l'élément B, dans la zone de liaison Z, à une température supérieure à la température de fusion de l'extrémité de l'élément A. On chauffe pareillement l'extrémité de l'élément B qui vient en contact avec l'élément A, dans la zone de liaison Z, à une température supérieure à la température de fusion de l'extrémité de l'élément B. Ensuite, on presse l'extrémité chauffée de l'élément A contre l'extrémité chauffée de l'élément B. En pressant l'élément A contre l'élément B, il se forme un bourrelet externe 50 à la périphérie extérieure de la zone de liaison Z ainsi qu'un bourrelet interne 51 à l'intérieur de l'espace délimité par l'épaulement intérieur 48, la rainure annulaire 49a et la portion tubulaire 49b. Ces bourrelets 50, 51, aussi appelés cordons de soudure, sont de la matière plastique issue des éléments A et B, expulsée hors de la zone de liaison Z lors du pressage à chaud de l'élément A contre l'élément B. Dans ce mode préféré d'assemblage par enchevêtrement moléculaire, le bourrelet interne 51 se trouve confiné dans l'espace délimité par l'épaulement intérieur 48, la rainure annulaire 49a et la portion tubulaire 49b. En effet, l'espace délimité par l'épaulement intérieur 48, la rainure annulaire 49a et la portion tubulaire 49b forme un anneau de section rectangulaire dans l'épaisseur du liner, espace dans lequel le bourrelet interne 51 vient se loger. Grâce à cette caractéristique, le bourrelet interne 51 ne déborde plus des éléments A et/ou B, ce qui permet d'éviter certains problèmes rencontrés lors de l'utilisation de réservoirs composites de stockage de gaz, par exemple de l'hydrogène, à haute pression. On peut citer deux exemples de problème, la concentration de contraintes dans la zone de liaison Z et la formation de cloques d'hydrogène dans cette même zone, aussi appelée phénomène d'hydrogène « blistering ».La figure 12 montre une vue en coupe transversale d'un liner de section elliptique selon l'invention. Dans cette vue, le plan de coupe transversale traverse la zone de liaison Z. L'élément A est dessiné en traits continus et l'élément B est dessiné en traits interrompus courts (« pointillés »). L'anneau 25, 27, 43, 47, 51 n'est pas représenté. Cette figure illustre le grand axe intérieur A1i, le grand axe extérieur A1e ainsi que le petit axe intérieur A2i et le petit axe extérieur A2e de l'élément A. Cette figure illustre également le grand axe intérieur B1i, le grand axe extérieur B1e ainsi que le petit axe intérieur B2i et le petit axe extérieur B2e de l'élément B. Cette figure illustre enfin les épaisseurs Ep1 et Ep2 des éléments A et B respectivement, dans la zone de liaison Z. Quand l'épaisseur Ep1 est uniforme comme illustrée ici, Ep1 correspond à la moitié de la différence A1e - A1i et à la moitié de la différence A2e - A2i. De même, quand l'épaisseur Ep2 est uniforme comme illustrée ici, Ep2 correspond à la moitié de la différence B1e - B1i et à la moitié de la différence B2e - B2i. Dans le cas particulier où la section du liner 10 est circulaire (non représentée) et les épaisseurs Ep1 et Ep2 sont uniformes, on a les égalités suivantes : A1i est égal à A2i, A1e est égal à A2e, B1i est égal à B2i et B1e est égal à B2e. Dans un autre cas particulier (non représenté) où on a les égalités suivantes : A1i est égale à B1i, A2i est égale à B2i, A1e est égale à B1e et A2e est égale à B2e, on arrive aussi l'égalité suivante : Ep1 est égale à Ep2.Bien entendu, on pourra apporter de nombreuses modifications à l'invention sans sortir du cadre de celle-ci.

Par exemple, si malgré le confinement du bourrelet interne, une partie dudit bourrelet déborde encore dans le volume intérieur du liner 10 lors de l'assemblage par enchevêtrement moléculaire des éléments A et B, on peut envisager de supprimer ce débordement interne. En effet, le liner en plastique comportant au moins une ouverture latérale à une première de ses extrémités, il est possible de faire passer par cette ouverture un outil capable d'usiner le débordement du bourrelet interne. Alternativement, juste après l'assemblage à chaud des éléments A et B, quand le bourrelet est encore mou, il est avantageux d'étaler le débordement du bourrelet interne à l'intérieur du liner, sur la paroi intérieure dudit liner, avec un outil de type spatule plutôt que de l'usiner.

Alternativement encore, juste après l'assemblage à chaud des éléments A et B, quand le bourrelet est encore mou, il est avantageux d'aplatir le débordement du bourrelet à l'intérieur du liner, sur la paroi intérieure dudit liner, par mise sous pression du liner. En effet, en plaçant le liner dans une coque pour empêcher le liner de gonfler, puis en bouchant hermétiquement la ou les ouvertures latérales du liner et en y injectant de l'air sous pression, par exemple de 1 à 10 bars, de préférence 5 bars, le débordement du bourrelet mou à l'intérieur du liner est aplati contre la paroi intérieure du liner. Dans une variante de réalisation, un ballon est introduit à l'intérieur du liner et l'air sous pression est envoyé dans le ballon, grâce à cette caractéristique, le débordement du bourrelet mou à l'intérieur du liner est mieux aplati contre la paroi intérieure du liner.

Pour des applications particulières, des polyéthylènes (PE) pourraient remplacés les polyamides (PA) et les polyphthalamides (PPA). Par exemple, pour la fabrication de réservoir composite de stockage de gaz naturel comprimé à 350 bar.

## Revendications

1. Réservoir composite de stockage de gaz à haute pression comprenant un liner (10) et au moins une enveloppe de renforcement dudit liner en matériau composite, ledit liner (10) ayant une forme allongée le long d'un axe longitudinal (X) et comprenant au moins une zone de liaison (Z) dans laquelle un premier élément (A) en un premier polymère thermoplastique (M1) est assemblé à étanchéité avec un deuxième élément (B) en un deuxième polymère thermoplastique (M2) pour former un volume intérieur de stockage de gaz, ledit premier élément (A) ayant dans la zone de liaison (Z) avec ledit deuxième élément (B) une forme circulaire ou elliptique délimitant le volume intérieur de stockage de gaz, ladite forme circulaire ou elliptique dudit premier élément (A) étant définie par un premier grand axe intérieur (A1i) et un premier grand axe extérieur (A1e) ainsi que par un premier petit axe intérieur (A2i) et un premier petit axe extérieur (A2e), ledit deuxième élément (B) ayant dans la zone de liaison avec ledit premier élément (A) une forme circulaire ou elliptique délimitant le volume intérieur de stockage de gaz, ladite forme circulaire ou elliptique dudit deuxième élément (B) étant définie par un deuxième grand axe intérieur (B1i) et un deuxième grand axe extérieur (B1e) ainsi que par un deuxième petit axe intérieur (B2i) et un deuxième petit axe extérieur (B2e), ledit premier grand axe extérieur (A1e) étant égal au deuxième grand axe extérieur (B1e) et ledit premier petit axe extérieur (A2e) étant égal au deuxième petit axe extérieur (B2e), ledit premier grand axe intérieur (A1i) étant différent du deuxième grand axe intérieur (B1i), ledit premier petit axe intérieur (A2i) étant différent du deuxième petit axe intérieur (B2i), **caractérisé en ce que** le premier grand axe intérieur (A1i) et/ou le premier petit axe intérieur (A2i) est inférieur de 0,1 mm à 1,5 mm au deuxième grand axe intérieur (B1i) et/ou au deuxième petit axe intérieur (B2i), respectivement.

2. Réservoir selon la revendication 1, **caractérisé en ce que** le premier élément (A) comprend un tube (12,14,15) et le deuxième élément (B) comprend une calotte appelée dôme (11,13,16,18).

3. Réservoir selon la revendication 2, **caractérisé en ce que** le premier élément (A) comprend en outre une calotte appelée dôme (11,13,16,18).

4. Réservoir selon la revendication 2 ou 3, **caractérisé en ce que** le deuxième élément (B) comprend en outre un tube (12,14,15).

5. Réservoir selon l'une quelconque des revendications précédentes, **caractérisé en ce que** le deuxième élément (B) comprend un sommet à une première extrémité (13a, 16a, 18a) et une base à une deuxième extrémité (13b, 16b, 18b) et **en ce que** ledit deuxième élément (B) est prolongé à sa deuxième extrémité (13b, 16b, 18b) par une interface tubulaire (T) de section circulaire ou elliptique.

6. Réservoir selon la revendication 5, **caractérisé en ce que** la longueur de ladite interface tubulaire (T) est supérieure ou égale à 10 mm.

7. Réservoir selon l'une quelconque des revendications précédentes, **caractérisé en ce que** l'assemblage à étanchéité du premier élément (A) avec le deuxième élément (B) dans la zone de liaison (Z) est un assemblage par enchevêtrement moléculaire de chaînes polymériques du premier polymère thermoplastique (M1) et de chaînes polymériques du deuxième polymère thermoplastique (M2).

8. Réservoir selon l'une quelconque des revendications précédentes, **caractérisé en ce que** les premier et deuxième polymères thermoplastiques (M1) et (M2) sont des polyamides (PA), des polyphthalamides (PPA) ou un mélange de (PA) et de (PPA).

9. Réservoir selon l'une quelconque des revendications précédentes, **caractérisé en ce qu'**il comprend en outre, dans la zone de liaison (Z), un anneau (25, 27, 43, 47, 51) formé au moins en partie dans une première épaisseur (Ep1) dudit premier élément (A) et/ou dans une deuxième épaisseur (Ep2) dudit deuxième élément (B) du liner (10).

10. Réservoir selon la revendication précédente, **caractérisé en ce que** ledit anneau (25, 27, 43, 47, 51) présente, dans un plan de coupe longitudinale passant par l'axe longitudinal (X), une section soit en forme de U, de triangle, d'ellipse ou de rectangle.

11. Réservoir composite selon l'une quelconque des revendications précédentes, **caractérisé en ce que** l'enveloppe de renforcement en matériau composite est un bobinage filamentaire imprégné d'une résine.

## Patentansprüche

1. Verbundtank für die Speicherung von Hochdruckgas, der einen Liner (10) und mindestens eine Hülle zur Verstärkung des Liners aus Verbundmaterial aufweist, wobei der Liner (10) eine längliche Form entlang einer Längsachse (X) hat und mindestens einen Verbindungsbereich (Z) aufweist, in dem ein erstes Element (A) aus einem ersten thermoplastischen Polymer (M1) mit einem zweiten Element (B) aus einem zweiten thermoplastischen Polymer (M2) dicht verbunden ist, um ein inneres Gasspeichervolumen zu bilden, das erste Element (A) im Verbindungsbereich (Z) mit dem zweiten Element (B) eine kreisförmige oder10 elliptische Form aufweist, die das innere Gasspeichervolumen begrenzt, wobei die kreisförmige oder elliptische Form des ersten Elements (A) durch eine erste große Innenachse (A1i) und eine erste große Außenachse (A1e) sowie durch eine erste kleine Innenachse (A2i) und eine erste kleine Außenachse (A2e) definiert ist, das zweite Element (B) im Bereich der Verbindung mit dem ersten Element (A) eine kreisförmige oder elliptische Form hat, die das innere Gasspeichervolumen begrenzt, wobei die kreisförmige oder elliptische Form des zweiten Elements (B) durch eine zweite große Innenachse (B1i) und eine zweite große Außenachse (B1e) sowie durch eine zweite kleine Innenachse (B2i) und eine zweite kleine Außenachse (B2e) definiert ist, wobei die erste große Außenachse (A1e) gleich der zweiten großen Außenachse (B1e) ist und die erste kleine Außenachse (A2e) gleich der zweiten großen Außenachse (B2e) ist,
wobei die erste große Innenachse (A1i) von der zweiten großen Innenachse (B1i) verschieden ist und die erste kleine Innenachse (A2i) von der zweiten kleinen Innenachse (B2i) verschieden ist, **dadurch gekennzeichnet, dass** die erste große Innenachse (A1i) und/oder die erste kleine Innenachse (A2i) um 0,1 mm bis 1,5 mm kleiner ist als die zweite große Innenachse (B1i) und/oder die zweite kleine Innenachse (B2i).

2. Tank nach Anspruch 1, **dadurch gekennzeichnet, dass** das erste Element (A) ein Rohr (12, 14, 15) aufweist und das zweite Element (B) eine als Dom bezeichnete Kappe (11, 13, 16, 18) aufweist.

3. Tank nach Anspruch 2, **dadurch gekennzeichnet, dass** das erste Element (A) zusätzlich eine als Dom bezeichnete Kappe (11, 13, 16, 18) aufweist.

4. Tank nach Anspruch 2 oder 3, **dadurch gekennzeichnet, dass** das zweite Element (B) zusätzlich ein Rohr (12, 14, 15) aufweist.

5. Tank nach einem der vorhergehenden Ansprüche, **dadurch gekennzeichnet, dass** das zweite Element (B) eine Spitze an einem ersten Ende (13a, 16a, 18a) und eine Basis an einem zweiten Ende (13b, 16b, 18b) aufweist und dass das zweite Element (B) an seinem zweiten Ende (13b, 16b, 18b) durch eine röhrenförmige Schnittstelle (T) mit kreisförmigem oder elliptischem Querschnitt verlängert ist.

6. Tank nach Anspruch 5, **dadurch gekennzeichnet, dass** die Länge der röhrenförmigen Schnittstelle (T) größe oder gleich 10 mm ist.

7. Tank nach einem der vorhergehenden Ansprüche, **dadurch gekennzeichnet, dass** die Dichtverbindung des ersten Elements (A) mit dem zweiten Element (B) in dem Verbindungsbereich (Z) eine molekulare Verflechtungsverbindung von Polymerketten des ersten thermoplastischen Polymers (M1) und Polymerketten des zweiten thermoplastischen Polymers (M2) ist.

8. Tank nach einem der vorhergehenden Ansprüche, **dadurch gekennzeichnet, dass** die ersten und zweiten thermoplastischen Polymere (M1) und (M2) Polyamide (PA), Polyphthalamide (PPA) oder eine Mischung aus (PA) und (PPA) sind.

9. Tank nach einem der vorhergehenden Ansprüche, **dadurch gekennzeichnet, dass** er außerdem in dem Verbindungsbereich (Z) einen Ring (25, 27, 43, 47, 51) aufweist, der zumindest teilweise in einer ersten Dicke (Ep1) des ersten Elements (A) und/oder in einer zweiten Dicke (Ep2) des zweiten Elements (B) des Liners (10) ausgebildet ist.

10. Tank nach dem vorhergehenden Anspruch, **dadurch gekennzeichnet, dass** der Ring (25, 27, 43, 47, 51) in einer Längsschnittebene, die durch die Langsachse (X) verlauft, einen Querschnitt entweder in Form eines U, eines Dreiecks, einer Ellipse oder eines Rechtecks aufweist.

11. Verbundtank nach einem der vorhergehenden Ansprüche, **dadurch gekennzeichnet, dass** die Verstärkungshülle aus Verbundmaterial eine mit einem Harz imprägnierte Filamentwicklung ist

## Claims

1. Composite reservoir for storing high-pressure gas comprising a liner (10) and at least one reinforcement envelope of said composite liner, said liner (10) having an elongated shape along a longitudinal axis (X) and comprising at least one bonding zone (Z) wherein a first element (A) in a first thermoplastic polymer (M1) is assembled in a sealing manner with a second element (B) in a second thermoplastic polymer (M2) for form an internal gas storage volume, said first element (A) having in the bonding zone (Z) with said second element (B) a circular or elliptical shape delimiting the internal gas storage volume, said circular or elliptical shape of said first element (A) being defined by a first major inner axis (A1i) and a first major outer axis (A1e) as well as by a first small inner axis (A2i) and a first small small axis outer axis (A2e), said second element (B) having in the bonding zone with said first element (A) a circular or elliptical shape delimiting the internal gas storage volume, said circular or elliptical shape of said second element (B) being defined by a second major inner axis (B1i) and a second major outer axis (B1e) as well as a second small inner axis (B2i) and a second small outer axis (B2e), said first outer major axis (A1e) being equal to the second outer major axis (B1e) and said first small outer axis (A2e) being equal to the second small outer axis (B2e), said first major inner axis (A1i) being different from the second major inner axis (B1i), said first small inner axis (A2i) being equal to the second major inner axis (A2i) being different from the second small inner axis (B2i), **characterized in that** the first major inner axis (A1i) and/or the first small inner axis (A2i) is smaller than the second major inner axis (B1i) and/or the second small inner axis (B2i) by 0.1 mm to 1.5 mm, respectively.

2. Reservoir according to claim 1, **characterized in that** the first element (A) comprises a tube (12,14,15) and the second element (B) comprises a cap called dome (11,13,16,18).

3. Reservoir according to claim 2, **characterized in that** the first element (A) further comprises a cap called dome (11,13,16,18).

4. Reservoir according to claim 2 or 3, **characterized in that** the second element (B) further comprises a tube (12,14,15).

5. Reservoir according to any one of the preceding claims, **characterized in that** the second element (B) comprises a vertex at a first end (13a, 16a, 18a) and a base at a second end (13b, 16b, 18b) and **in that** said second element (B) is extended at its second end (13b, 16b, 18b) by a tubular interface (T) of circular or elliptical cross-section.

6. Reservoir according to claim 5, **characterized in that** the length of said tubular interface (T) is greater than or equal to 10 mm.

7. Reservoir according to any one of the preceding claims, **characterized in that** the sealing assembly of the first element (A) with the second element (B) in the bonding zone (Z) is an assembly by molecular entanglement of polymeric chains of the first thermoplastic polymer (M1) and polymeric chains of the second thermoplastic polymer (M2).

8. Reservoir according to any of the preceding claims, **characterized in that** the first and second thermoplastic polymers (M1) and (M2) are polyamides (PA), polyphthalamides (PPA) or a mixture of (PA) and (PPA).

9. Reservoir according to any one of the preceding claims, **characterized in that** it further comprises, in the bonding area (Z), a ring (25, 27, 43, 47, 51) formed at least partly in a first thickness (Ep1) of said first element (A) and / or in a second thickness (Ep2) said second element (B) of the liner (10).

10. Reservoir according to the preceding claim, **characterized in that** said ring (25, 27, 43, 47, 51) presents, in a longitudinal cutting plane passing through the longitudinal axis (X), a section either U-shaped, triangle, ellipse or rectangle.

11. Composite reservoir according to any one of the preceding claims, **characterized in that** the composite material reinforcement envelope is a filament winding impregnated with a resin.
